# EUROPÄISCHE PATENTSCHRIFT

(11) **EP 4 451 085 B1**
(45) Veröffentlichungstag und Bekanntmachung des Hinweises auf die Patenterteilung: **22.01.2025**
(21) Anmeldenummer: 23168191.7
(22) Anmeldetag: 17.04.2023
(51) Int. Cl.: G05D 1/00, G05D 1/242, G05D 1/249, G05D 1/667, G05D 107/00, G05D 109/10, G05D 111/10, G05D 105/28, G05D 1/633

(54) **BELADEN UND ENTLADEN EINES LADERAUMS MIT EINEM LADEFAHRZEUG**
LOADING AND UNLOADING A CARGO AREA WITH A LOADING VEHICLE
CHARGEMENT ET DÉCHARGEMENT D'UN ESPACE DE CHARGEMENT AVEC UN VÉHICULE DE CHARGEMENT

(43) Veröffentlichungstag der Anmeldung: 23.10.2024
(73) Patentinhaber: SICK AG, 79183 Waldkirch (DE)
(72) Erfinder: Ams, Mathias, 79211 Denzlingen (DE); Mosgalewsky, Eduard, 77652 Offenburg (DE); Faccini, Fabricio, Emmendingen (DE)

(56) Entgegenhaltungen:
- DE-A1- 102019 128 782
- US-A1- 2018 194 575

## Beschreibung

Die Erfindung betrifft ein Verfahren zum Beladen und/oder Entladen eines Laderaums mit einem Ladefahrzeug sowie ein Absicherungssystem für das Beladen und/oder Entladen eines Laderaums mit einem Ladefahrzeug nach dem Oberbegriff von Anspruch 1 beziehungsweise 15.

Das Beladen und Entladen eines Lastkraftwagens beziehungsweise dessen Aufliegers an einer Laderampe (Truck Loading) erfolgt bislang manuell mit einem bemannten Gabelstapler. Es liegt dabei in der Verantwortung des Staplerfahrers, auf Personen zu achten und Unfälle zu vermeiden. Zwar werden im Logistikbereich autonome Fahrzeuge eingesetzt, die grundsätzlich auch in der Lage wären, das Beladen und Entladen zu übernehmen oder wenigstens einen Mischbetrieb zwischen manuellem und automatisiertem Betrieb zu ermöglichen. Es fehlt aber an einer Lösung, um während des Be- und Entladevorgangs sicherzustellen, dass sich keine Person im Auflieger befindet. In anderen automatisierten Anwendungen in der Logistik arbeiten autonome Fahrzeuge nur in für Personen abgesperrten Bereichen. Das ist an einer Laderampe nicht umsetzbar.

Autonome Fahrzeuge überwachen bereits zur Unfallvermeidung ihre Fahrt mit Sensoren. Dazu wird beispielsweise ein Schutzfeld in Fahrtrichtung überwacht. Wird ein Objekt in dem Schutzfeld erkannt, so wird eine Gefahrensituation angenommen und das Fahrzeug abgebremst. Dafür werden berührungslos wirkende Sensorprinzipien eingesetzt. In der Unfallvermeidung beziehungsweise der Sicherheitstechnik eingesetzte Sensoren müssen besonders zuverlässig arbeiten und deshalb hohe Sicherheitsanforderungen erfüllen, beispielsweise die Norm EN ISO 13849 für Maschinensicherheit und die Gerätenorm EN/IEC 61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile.

Eine herkömmliche Schutzfeldüberwachung funktioniert aber in einem Auflieger nicht. Die Ladung ist aus ökonomischen Gründen sehr dicht und ohne Leerräume gepackt. Mit einer Schutzfeldüberwachung wird üblicherweise nur festgestellt, ob das Schutzfeld frei von Objekten ist. Das wäre innerhalb des Aufliegers so gut wie nie der Fall, so dass das Fahrzeug praktisch nicht mehr aus dem Stillstand herauskommt. Es gibt schon auch Ansätze, zwischen zulässigen und nicht zulässigen Objekten in einem Schutzfeld zu differenzieren, aber besonders unter den genannten dichten Lagerbedingungen ist heutige Sensorik nicht in der Lage, verlässlich zwischen Personen und Ladegut zu unterscheiden.

Die US 10 815 080 B2 offenbart ein automatisches Lade- und Entladesystem für Lastkraftwagen, das eine optimierte Anordnung der Ladung plant und autonome Fahrzeuge entsprechend steuert. Das Dokument geht jedoch auf Sicherheitsaspekte nicht ein.

Andere herkömmliche Ansätze beruhen auf speziellen Installationen im Ladebereich beispielsweise mit Förderanlagen. So ist bekannt, die gesamte Ladung außerhalb des Lastkraftwagens oder Aufliegers in der richtigen Anordnung vorzubereiten und dann als Ganzes zu bewegen. Dieses Vorgehen ist somit auf spezielle Ladeinfrastruktur beschränkt, und erneut ist die Sicherheit zunächst nicht mit bedacht und demnach noch zusätzlich und unabhängig zu gewährleisten.

In der DE 10 2019 128 782 A1 werden sogenannte Sicherheitspunkte vorgestellt. Das sind Positionen, die eine bewegbare Maschine mit Hilfe eines Lokalisierungssystems identifiziert und an denen eine Sicherheitsfunktion eines Sicherheitssystems der bewegbaren Maschine umgeschaltet wird. Das Lokalisierungssystem basiert im Falle der DE 102019 128 782 A1 auf einem Entfernungssensor und einer Konturerkennungseinheit. Die Sicherheitspunkte sind aber in keinen Zusammenhang mit einem Be- und Entladen gebracht.

Das Dokument US 2018/194575 A1 offenbart ein System zum Beladen von Gegenständen, bei dem ein automatisiertes Fahrzeug während des Beladens von Gegenständen gesteuert wird, basierend auf der Größe des zu beladenden Fahrzeugs und der Größe der zu Beladenden Gegenständen.

Aus der EP 3 859 382 A1 ist ein Verfahren zur Lokalisierung einer Person oder eines Objekts in einem Überwachungsbereich mit einem Sicherheitssystem bekannt. Es basiert auf einem Funkortungssystem mit mehreren Funkstationen, die Funktransponder an der Person oder dem Objekt erfassen. Zudem ist ein ortsauflösender Sensor zur Positionsbestimmung vorgesehen. Durch Vergleich der Positionsdaten des Funkortungssystems und des ortsauflösenden Sensors werden sichere Positionsdaten erfasst. Diese Positionsbestimmung wird ohne jeden Zusammenhang mit einem Be- und Entladen beschrieben.

Es ist daher Aufgabe der Erfindung, das Beladen beziehungsweise Entladen eines Laderaums mit einem Ladefahrzeug zu vereinfachen.

Diese Aufgabe wird durch ein Verfahren zum Beladen und/oder Entladen eines Laderaums mit einem Ladefahrzeug sowie ein Absicherungssystem für das Beladen und/oder Entladen eines Laderaums mit einem Ladefahrzeug nach Anspruch 1 beziehungsweise 15 gelöst. Ein Laderaum ist ein beispielsweise durch Wände abgeschlossener und deshalb nur durch einen Zugangsbereich zugänglicher Bereich, in dem als Ladeobjekte bezeichnete Waren oder sonstige Objekte eingelagert werden, vorzugsweise für einen Transport wie im Falle eines Containers, Anhängers oder Aufliegers. Ein Ladefahrzeug fährt dafür mindestens einmal, in der Regel vielfach wiederholt in den Laderaum, um mindestens ein Ladeobjekt abzulegen und/oder abzuholen. Das Ladefahrzeug ist vorzugsweise ein autonomes Fahrzeug, wie ein AGV (Automated Guided Vehicle) oder ein AMR (Autonomous Mobile Robot). Alternativ kann das Ladefahrzeug doch von einem Fahrer geführt werden. Dann ist der Fahrer automatisch durch die Erfindung gegen mögliche Unfälle mit Personen oder sonstigen Objekten in seinem Arbeitsbereich geschützt.

Der Zugangsbereich, der die einzige Möglichkeit darstellt, in den Laderaum zu gelangen, ist von mindestens einem ersten Sensor abgesichert. Die Absicherung mit dem ersten Sensor wird im Folgenden bisweilen als stationäre Absicherung bezeichnet. Das Ladefahrzeug selbst ist von mindestens einem zweiten Sensor abgesichert. Die Absicherung mit dem zweiten Sensor wird entsprechend mobile Absicherung genannt. Die stationäre und mobile Absicherung gemeinsam sorgen dafür, dass das Ladefahrzeug während des Be- und Entladens nicht mit unerwarteten Objekten kollidiert und insbesondere Unfälle mit Personenschäden vermieden werden.

Die Erfindung geht von dem Grundgedanken aus, dass stationäre und mobile Absicherung einander ergänzen und gemeinsam einen automatisierten, unfallfreien Betrieb gewährleisten. Ein kritisches Moment liegt darin, dass die stationäre Absicherung für das Ladefahrzeug durchlässig bleiben muss, ohne dass dies absichtlich oder unabsichtlich von Personen genutzt werden kann, um unbemerkt in den Fahrweg des Ladefahrzeugs oder in den Laderaum zu gelangen. Dazu wird erfindungsgemäß eine erste Position des Ladefahrzeugs dadurch definiert, dass sie sich ganz nahe an dem abgesicherten Zugangsbereich befindet. Eine Person passt in der ersten Position nicht zwischen Ladefahrzeug und abgesicherten Zugangsbereich. Das orientiert sich an anthropometrischen Maßen, wobei ein Körper typischerweise in den hier relevanten Querschnittsmaßen jedenfalls größer ist als beispielsweise 20 cm, 30 cm, 50 cm oder 70 cm. Die erste Position ist erst einmal nur in einer Dimension definiert, um einen Abstand zum abgesicherten Zugangsbereich festzulegen. In späteren Ausführungsformen kann eine zweite laterale Dimension hinzukommen.

Das Ladefahrzeug fährt bei der Einfahrt in den Laderaum zunächst in die erste Position. Anschließend wird die Absicherung des Zugangsbereichs durch den ersten Sensor derart angepasst, dass ein Durchfahrtkorridor für das Ladefahrzeug geschaffen ist. In der stationären Absicherung erfolgt mit anderen Worten ein partielles Stummschalten (Muting), das es dem Ladefahrzeug ermöglicht, durch den abgesicherten Zugangsbereich in den Laderaum zu fahren. Da die erste Position so dicht an dem Zugangsbereich liegt, kann keine Person unbemerkt in den Durchfahrtkorridor eindringen.

Die Erfindung hat den Vorteil, dass ein automatisiertes Be- und Entladen ermöglicht wird, das die Sicherheitsaspekte berücksichtigt. Damit ist im Gegensatz zu bisherigen Ansätzen nicht mehr erforderlich, den gesamten Aktionsbereich des Ladefahrzeugs für Personen zu sperren. Das ist neben dem Abschieben der Verantwortung an den Staplerfahrer der bisherige Weg, um Unfälle zu vermeiden. Um den Zugang von Personen insgesamt zu verhindern, ist jedoch eine teure und komplexe Infrastruktur mit einer Vielzahl von Komponenten und entsprechendem Platzbedarf erforderlich. Außerdem schränkt dies erheblich die Flexibilität der logistischen Prozesse ein und ist störanfällig. Die Erfindung hat diese Nachteile nicht. Personen dürfen sich im Umfeld aufhalten und beispielsweise bei drohenden Störungen rechtzeitig eingreifen oder ergänzende Arbeitsschritte vornehmen. Zu Unfällen kann es dank der Erfindung nicht kommen.

Der erste Sensor erkennt bevorzugt die Anwesenheit eines Objekts in dem Zugangsbereich. Bis auf die Ausnahmesituation des Ladefahrzeugs im Durchfahrtkorridor soll der Zugangsbereich undurchlässig sein, jedenfalls sollen Objekte nicht unerkannt eindringen. Der zweite Sensor erkennt bevorzugt die Anwesenheit eines Objekts vor dem Ladefahrzeug. Dadurch sollen Kollisionen während der Fahrt des Ladefahrzeugs vermieden werden, deshalb sind Objekte vor allem in Fahrtrichtung von Interesse. Es können zusätzlich Objekte in anderen Richtungen erfasst werden, um beispielsweise Unfälle bei einem Richtungswechsel des Ladefahrzeugs zu vermeiden oder mit Situationen wie einer von der Seite her vor das Ladefahrzeug springenden Person umzugehen. Bei Erkennung der Anwesenheit eines Objekts wird vorzugsweise eine Sicherheitsreaktion des Ladefahrzeugs eingeleitet. Hat die mobile Absicherung ein Objekt erkannt, so ist die mögliche Gefährdung offensichtlich. Ein von der stationären Absicherung erkanntes Objekt bedeutet, dass sich Objekte in Bereichen befinden können, wo die mobile Absicherung nicht darauf vorbereitet ist, insbesondere in dem Laderaum. Deshalb löst vorzugsweise auch die stationäre Absicherung bei Erkennung der Anwesenheit eines Objekts in dem Zugangsbereich eine Sicherheitsreaktion aus. Je nach Sicherheitskonzept kann das Ladefahrzeug beispielsweise angehalten werden, eine Ausweichbewegung durchführen oder auf eine sichere langsame Geschwindigkeit von beispielsweise weniger als 0,3 m/s abgebremst werden. Die Sicherheitsreaktion kann von einem optischen oder akustischen Warnsignal begleitet oder angekündigt werden.

Der Laderaum ist vorzugsweise ein Anhänger oder Auflieger eines Nutzfahrzeugs oder Lastkraftwagens. Das Beladen und/oder Entladen betrifft somit das einleitend erläuterte Szenario, wobei vorzugsweise der Zugangsbereich an einer Laderampe angeordnet ist. Das Ladefahrzeug fährt beispielsweise zwischen einem Logistikbereich und dem Anhänger und Auflieger hin und her. Vorzugsweise wird in zwei Schritten das Ladegut zunächst in der Nähe der Laderampe vorbereitet und dann verladen, wobei sich dann der erfindungsgemäße Ladevorgang auf den zweiten Schritt zwischen Laderampe und Laderaum bezieht.

Das Ladefahrzeug fährt bevorzugt durch den Durchfahrtkorridor in eine zweite Position, die sich so nahe an dem abgesicherten Zugangsbereich befindet, dass keine Person zwischen das Ladefahrzeug und den abgesicherten Zugangsbereich passt, und dann wird der Durchfahrtkorridor geschlossen und damit die Absicherung des Zugangsbereichs durch den ersten Sensor wieder vollständig aktiviert. In der zweiten Position befindet sich somit der Zugangsbereich hinter dem Ladefahrzeug, erneut so dicht, dass es für eine Person nicht möglich ist, unbemerkt den Durchfahrtkorridor zu nutzen. Denn wenn in der zweiten Position nun der Durchfahrtkorridor wieder geschlossen wird, würde eine darin befindliche Person von der stationären Absicherung entdeckt, und für ein rechtzeitiges unbemerktes Durchschlüpfen in den Laderaum reicht der Platz zwischen Ladefahrzeug und Durchfahrtkorridor nicht aus. Nach diesen Schritten befindet sich das Ladefahrzeug im Laderaum, der Zugangsbereich ist wieder undurchlässig, und es ist sichergestellt, dass ausschließlich das Ladefahrzeug den abgesicherten Zugangsbereich passiert hat.

Das Ladefahrzeug fährt bevorzugt bei der Ausfahrt aus dem Laderaum zunächst in die zweite Position, und dann wird die Absicherung des Zugangsbereichs durch den ersten Sensor derart angepasst, dass ein Durchfahrtkorridor für das Ladefahrzeug geschaffen ist. Anschließend fährt vorzugsweise das Ladefahrzeug durch den Durchfahrtkorridor in die erste Position, und dann wird der Durchfahrtkorridor geschlossen und damit die Absicherung des Zugangsbereichs durch den ersten Sensor wieder vollständig aktiviert. Der Durchfahrtkorridor öffnet sich somit ausschließlich für das Ladefahrzeug, für eine Person ist zu keinem Zeitpunkt ausreichend Platz, um den Durchfahrtkorridor unbemerkt zu nutzen. Bei der Ausfahrt werden in gewisser Weise die Schritte bei der Einfahrt unter vertauschten Rollen von erster und zweiter Position wiederholt. Unterschiede ergeben sich allerdings in der bevorzugten Aktivität der mobilen Absicherung, wie nachfolgend noch erläutert.

Vorzugsweise wird eine laterale Position des Durchfahrtkorridors an eine laterale Position des Ladefahrzeugs angepasst. Es wird somit erfasst, wo das Ladefahrzeug in lateraler Richtung vor dem Zugangsbereich steht, und der Durchfahrtkorridor öffnet sich gerade vor dem Ladefahrzeug. In dieser Ausführungsform sind erste und zweite Position nur eindimensional als Abstand zum Zugangsbereich definiert, die zweite laterale Ortsdimension oder quer zum Abstand wird dynamisch verarbeitet. Alternativ kann der Durchfahrtkorridor nur an einer festen, nun zweidimensional definierten ersten oder zweiten Position geschaffen werden, die dann entsprechend von dem Ladefahrzeug unter Beachtung der lateralen Position anzufahren ist. Ein solcher Durchfahrtkorridor kann insbesondere als vordefinierte Schutzfeldkonfiguration vorbereitet sein, auf die die stationäre Absicherung für die und während der Durchfahrt umgeschaltet wird. Es ist weiterhin möglich, mehrere erste und/oder zweite Positionen vorzusehen, die sich in ihrer lateralen Koordinate voneinander unterscheiden, das ist eine Art Zwischenschritt von festen ersten und zweiten Positionen zu einer gänzlich dynamischen Berücksichtigung der lateralen Position des Ladefahrzeugs.

Die Absicherung des Ladefahrzeugs mit dem zweiten Sensor ist vorzugsweise während der Bewegung in dem Laderaum inaktiv. Durch das erfindungsgemäße Vorgehen ist sichergestellt, dass keine Person in den Laderaum gelangt sein kann. Somit kann das Ladefahrzeug innerhalb des Laderaums ohne Rücksicht auf mögliche Unfälle mit beweglichen Objekten oder Personen agieren. Voraussetzung dafür ist, dass sich im Laderaum anfänglich bei Aktivierung der stationären Absicherung keine Personen aufhalten. Das zu prüfen, beispielsweise durch den Fahrer eines Lastwagens bei Bereitstellung und Öffnen eines Aufliegers, ist aber eine übliche Anforderung bei Inbetriebnahme einer Sicherheitsanwendung.

Die Absicherung des Ladefahrzeugs mit dem zweiten Sensor wird vorzugsweise bei der Einfahrt in den Laderaum frühestens ab der ersten Position inaktiv und bei der Ausfahrt aus dem Laderaum bis spätestens zu der zweiten Position wieder aktiv geschaltet. Ab der ersten Position bei Einfahrt und bis zur zweiten Position bei Ausfahrt ist die mobile Absicherung nicht erforderlich, weil die stationäre Absicherung sicherstellt, dass keine Personen die Fahrwege des Ladefahrzeugs kreuzen. Vorzugsweise erfolgt die Umschaltung genau an der ersten Position bei Einfahrt und genau in der zweiten Position bei Ausfahrt, damit die mobile Absicherung nicht unnötig redundant zur stationären Absicherung arbeitet und beispielsweise eine unnötige Sicherheitsreaktion durch ein Ladeobjekt schon im Eingangsbereich des Laderaums ausgelöst wird. Bei der Ausfahrt muss die mobile Absicherung bereits an der zweiten Position aktiv werden, da eine Person unmittelbar vor dem Zugangsbereich stehen könnte, wo die stationäre Absicherung sie noch nicht erfasst.

Vorzugsweise erkennt das Ladefahrzeug, wenn es sich in einen sicherheitsrelevanten Bereich vor dem Zugangsbereich bewegt, und schaltet spätestens dann die Absicherung mit dem zweiten Sensor aktiv. Der Bereich vor dem Zugangsbereich, insbesondere der Bereich einer Laderampe, ist als sicherheitsrelevant anzusehen (confined). Erfindungsgemäß ist gerade nicht erforderlich, durch zusätzliche Maßnahmen auszuschließen, dass sich hier Personen befinden, beispielsweise ein Fahrer des Lastkraftwagens oder ein Mitarbeiter, der die stationäre Absicherung jeweils für einen Be-/Entladevorgang in Betrieb nimmt. Deshalb sollte die mobile Absicherung aktiv sein. Weiter innen beispielsweise in einer Logistikhalle hingegen, woher die Ladungsobjekte geholt beziehungsweise wohin sie gebracht werden, kann durchaus ein Sperrbereich für Personen eingerichtet sein. Solche Bereiche sind dann nicht sicherheitsrelevant aus Sicht des Ladefahrzeugs, und es kann dort auf mobile Absicherung verzichtet werden. Die Erkennung des sicherheitsrelevanten Bereichs und die Umschaltung kann insbesondere mittels Sicherheitspunkten gemäß der einleitend genannten DE 10 2019 128 782 A1 realisiert sein.

Der Querschnitt des Durchfahrtkorridors entspricht bevorzugt dem Querschnitt des Ladefahrzeugs, zumindest bis auf einen Pufferbereich kleiner als eine Person. Der Durchfahrtkorridor ist somit nur gerade so groß, dass das Ladefahrzeug hindurch passt und keine Person unbemerkt mit in den Laderaum gelangen kann. Dabei ist eine gewisse Marge oder ein Pufferbereich zulässig, damit nicht schon kleine Fehlsteuerungen des Ladefahrzeugs zu einer Erfassung durch die stationäre Absicherung führen. Ein solcher Pufferbereich bleibt aber zu klein für eine Person, wobei die Abmessungen eines möglichen Pufferbereichs ähnlich den Abständen der ersten und zweiten Position zum abgesicherten Zugangsbereich festzulegen sind.

Ein stationäres Absicherungssystem des Zugangsbereichs mit dem ersten Sensor und ein mobiles Absicherungssystem des Ladefahrzeugs mit dem zweiten Sensor stehen vorzugsweise miteinander in Kommunikationsverbindung. Damit kann insbesondere das Ladefahrzeug ein Öffnen und Schließen des Durchfahrtkorridors anfordern und vorzugsweise jeweilige Rückbestätigungen dazu erhalten. Eine weitere nicht abschließend genannte Anwendungsmöglichkeit der Kommunikationsverbindung liegt darin, dass das mobile Absicherungssystem so erfahren kann, wenn das stationäre Absicherungssystem ein Objekt erfasst hat. In diesem Fall ist nicht mehr sichergestellt, dass der Laderaum frei von Personen ist, und das Ladefahrzeug muss seine weiteren Aktivitäten entsprechend anpassen, darf beispielsweise nur noch mit einer sicheren langsamen Geschwindigkeit arbeiten oder notfalls ganz anhalten. Da zwischen dem stationären und mobilen Absicherungssystem jedenfalls teilweise sicherheitsrelevante Informationen ausgetauscht werden, ist vorzugsweise eine funktional sichere Kommunikation zu gewährleisten, insbesondere durch entsprechende Protokolle.

Der erste Sensor zur Absicherung des Zugangsbereichs überwacht bevorzugt ein aufrechtes, insbesondere vertikales Schutzfeld. Der Begriff Schutzfeld ist in gewisser Weise historisch bedingt und kann ein Schutzvolumen, also einen dreidimensionalen Bereich bezeichnen. Das aufrechte Schutzfeld wirkt gleichsam wie eine virtuelle Wand, die den Laderaum schließt, wobei diese Wand eine gewisse Neigung aufweisen darf. Vorzugsweise wird das aufrechte Schutzfeld von mehr als einem ersten Sensor überwacht, um unterschiedliche Perspektiven zu realisieren, beispielsweise von je einem ersten Sensor zu beiden Seiten des Zugangsbereichs. Ansonsten würde während der Durchfahrt des Ladefahrzeugs eine Person in dessen Schatten unerkannt bleiben, so dass hier vorzugsweise ein zusätzlicher erster Sensor aus der Gegenrichtung aushilft. Alternativ kann ein Sensor aus der Vogelperspektive eingesetzt sein, dann sind Abschattungseffekte je nach konkreter Geometrie womöglich tolerierbar.

Der zweite Sensor zur Absicherung des Ladefahrzeugs überwacht bevorzugt ein insbesondere horizontales Schutzfeld in Fahrtrichtung. Die mobile Absicherung basiert also auf einer Schutzfeldüberwachung. Das Schutzfeld erstreckt sich zumindest in Fahrtrichtung und ist vorzugsweise zumindest annähernd parallel zum Boden orientiert. Alternativ kann es einen Fächer von Schutzfeldern unterschiedlicher Neigung geben, wobei dann vorzugsweise Schutzfeldverletzungen durch den Boden erkannt und ausgefiltert werden. Das Schutzfeld oder mindestens ein weiteres Schutzfeld kann in einem breiten Winkel nach vorn absichern und auch seitliche oder sogar rückwärtige Bereiche berücksichtigen. Schutzfeldabsicherungen eines Fahrzeugs sind an sich bekannt, so dass auf eine geeignete Schutzfeldkonfiguration und beispielsweise eine Anpassung an die Geschwindigkeit des Ladefahrzeugs nicht näher eingegangen wird.

Das Schutzfeld des zweiten Sensors wird vorzugsweise mit Annäherung an den Zugangsbereich sukzessive verkürzt. Das Schutzfeld der mobilen Absicherung ist so ausgelegt, dass bei Erfassung einer Person rechtzeitig reagiert oder abgebremst werden kann. Ab einer gewissen Annäherung an die erste Position bei Einfahrt in den Laderaum ragt ein solches Schutzfeld bereits in den Bereich hinein, den die stationäre Absicherung ohnehin unzugänglich macht. Diese Überwachung ist redundant und kann zu unnötigen Sicherheitsreaktionen beispielsweise durch Objekte im Eingangsbereich des Laderaums führen. Das lässt sich verhindern, indem das Schutzfeld der mobilen Absicherung verkürzt wird, vorzugsweise gerade so, dass es jeweils an dem Zugangsbereich endet. Einem Inaktivschalten der mobilen Absicherung in der ersten Position geht somit ein kontinuierlicher Übergang mit Verkürzen des Schutzfeldes voraus, wobei das Inaktivschalten als Verkürzung auf eine Länge Null verstanden werden kann.

Der erste Sensor und/oder der zweite Sensor ist bevorzugt einer der folgenden: ein einlagiger oder mehrlagiger Laserscanner, ein LIDAR-Sensor, eine 3D-Kamera, insbesondere eine Lichtlaufzeitkamera, ein Radar oder ein Funkortungssystem, letzteres insbesondere ein Ultrabreitbandsystem, wie es in der einleitend genannten EP 3 859 382 A1 beschrieben wird. Bei Verwendung eines Funkortungssystems ist das Ladefahrzeug beziehungsweise sind Personen vorzugsweise mit einem Funktransponder ausgestattet.

Die Auswahlmöglichkeiten für die Sensoren sind für die stationäre Absicherung wie die mobile Absicherung gegeben, wobei eine unterschiedliche Auswahl getroffen werden kann, beispielsweise der Zugangsbereich mit Laserscannern und das Ladefahrzeug mit einer Kamera oder einem Radar abgesichert werden kann. Die Sensoren sind vorzugsweise sichere Sensoren. Sicher und Sicherheit bedeuten wie in der gesamten Beschreibung, dass Maßnahmen ergriffen sind, um Fehler bis zu einem spezifizierten Sicherheitsniveau zu beherrschen beziehungsweise Vorschriften einer einschlägigen Sicherheitsnorm für Maschinensicherheit oder berührungslos wirkende Schutzeinrichtungen einzuhalten, von denen einleitend einige genannt sind. Nicht sicher ist der Gegenbegriff zu sicher, für nicht sichere Geräte, Übertragungswege, Auswertungen und dergleichen sind demnach die genannten Anforderungen an Fehlersicherheit nicht erfüllt.

Das Ladefahrzeug wird vorzugsweise sicher lokalisiert, zumindest in der ersten Position und/oder der zweiten Position. Optional kann das Ladefahrzeug an weiteren Positionen bis hin zum gesamten Be- und Entladebereich und darüber hinaus sicher lokalisiert werden. Dafür können insbesondere Positionen als Sicherheitspunkte (Safe Point of Interest) im Sinne der einleitend genannten DE 10 2019 128 782 A1 erkannt werden.

Das Verfahren ist zumindest hinsichtlich der Absicherungen und vorzugsweise auch einer autonomen Steuerung des Ladefahrzeugs ein computerimplementiertes Verfahren, das beispielsweise in einer Recheneinheit der mobilen und/oder stationären Absicherung oder eines übergeordneten Systems abläuft.

Das erfindungsgemäße Absicherungssystem für das Beladen und/oder Entladen eines Laderaums mit einem Ladefahrzeug weist ein erstes Sensorsystem zum Absichern eines Zugangsbereichs des Laderaums und ein zweites Sensorsystem zum Absichern des Ladefahrzeugs auf, wobei die beiden Sensorsysteme weiterhin als stationäres beziehungsweise mobiles Absicherungssystem oder auch als stationäre und mobile berührungslos wirkende Schutzeinrichtung bezeichnet werden können. Das Absicherungssystem ist dafür ausgebildet, in dem ersten Sensorsystem einen Durchfahrtkorridor für das Ladefahrzeug zu schaffen, wenn das Ladefahrzeug bei der Einfahrt in den Laderaum in eine erste Position gefahren ist, die sich so nahe an dem abgesicherten Zugangsbereich befindet, dass keine Person zwischen das Ladefahrzeug und den abgesicherten Zugangsbereich passt. Dabei ist zunächst nicht festgelegt, ob entsprechende Steuer- und Auswertungsfunktionalität dem ersten Sensorsystem, dem zweiten Sensorsystem und/oder einem übergeordneten System zuzurechnen ist, wobei vorzugsweise eine Kommunikationsverbindung besteht, um solche Rollen verteilt auszuüben. Die Absicherung kann nach einer der erläuterten Ausführungsformen des erfindungsgemäßen Verfahrens erfolgen.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Übersichtsdarstellung eines Absicherungssystems mit einer stationären Absicherung für einen Zugangsbereich und einer mobilen Absicherung eines Ladefahrzeugs;
- Fig. 2: eine schematische Draufsicht auf einen Ladebereich mit möglichen Gefährdungen von Personen durch ein Ladefahrzeug;
- Fig. 3: eine schematische Draufsicht auf einen Ladebereich bei Annäherung eines einfahrenden Ladefahrzeugs an einen abgesicherten Zugangsbereich;
- Fig. 4: eine schematische Draufsicht auf den Ladebereich, in der das einfahrende Ladefahrzeug eine erste Position dicht an dem abgesicherten Zugangsbereich erreicht hat;
- Fig. 5: eine schematische Draufsicht auf den Ladebereich, in der sich das einfahrende Ladefahrzeug in einem Durchfahrtkorridor durch den abgesicherten Zugangsbereich befindet;
- Fig. 6: eine schematische Draufsicht auf den Ladebereich, nachdem das einfahrende Ladefahrzeug in eine zweite Position dicht hinter dem abgesicherten Zugangsbereich eingefahren ist und der Durchfahrtkorridor wieder geschlossen ist;
- Fig. 7: eine schematische Draufsicht auf den Ladebereich, in der das Ladefahrzeug bei Ausfahrt aus dem Laderaum erneut die zweite Position dicht an dem abgesicherten Zugangsbereich erreicht hat;
- Fig. 8: eine schematische Draufsicht auf den Ladebereich, in der sich das ausfahrende Ladefahrzeug in dem Durchfahrtkorridor durch den abgesicherten Zugangsbereich befindet; und
- Fig. 9: eine schematische Draufsicht auf den Ladebereich, in der das ausfahrende Ladefahrzeug erneut die erste Position außerhalb und dicht an dem abgesicherten Zugangsbereich erreicht hat und der Durchfahrtkorridor wieder geschlossen ist.

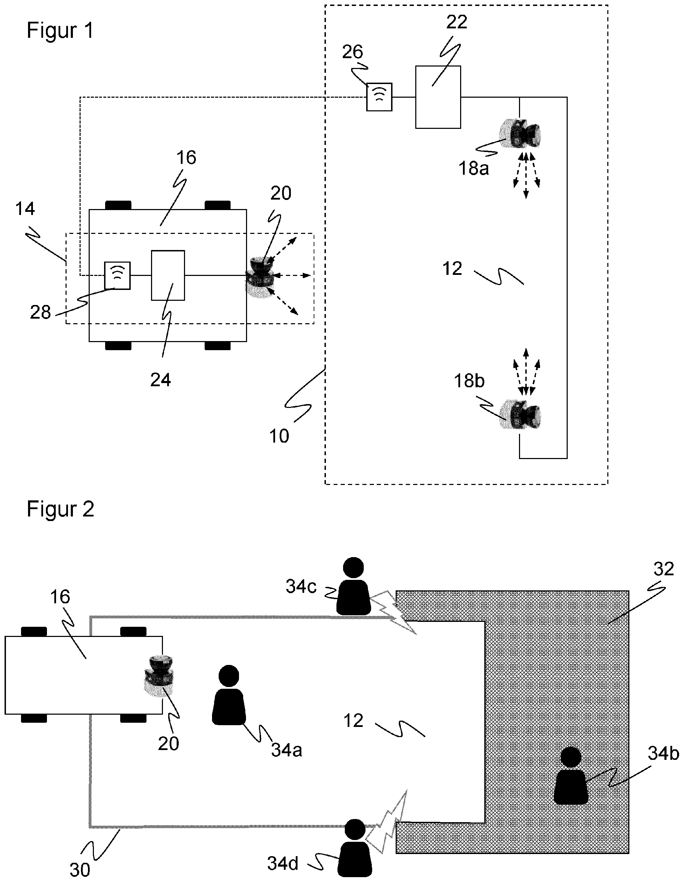

Figur 1 zeigt eine schematische Übersichtsdarstellung eines Absicherungssystems für einen Be-/Entladevorgang mit einem stationären Absicherungssystem 10 eines Zugangsbereichs 12 und einem mobilen Absicherungssystem 14 eines Ladefahrzeugs 16. Das Ladefahrzeug 16 ist vorzugsweise ein autonomes Fahrzeug, wie ein AGV (Automated Guided Vehicle) oder ein AMR (Autonomous Mobile Robot) und in der Lage, Ladeobjekte aufzunehmen und abzulegen und so von einem Ort zu einem anderen Ort zu befördern.

Das stationäre Absicherungssystem 10 weist mindestens einen vorzugsweise sicheren Sensor 18a-b auf, wobei in den Figuren beispielhaft jeweils zwei Sensoren 18a-b zu beiden Seiten des Zugangsbereichs 12 eingesetzt sind. Das mobile Absicherungssystem 14 weist ebenfalls mindestens einen vorzugsweise sicheren Sensor 20 auf, wobei in den Figuren beispielhaft nur ein Sensor 20 in Fahrtrichtung vorgesehen ist, jedoch mindestens ein weiterer Sensor für eine redundante, eine rückwärtige und/oder eine seitliche Überwachung ergänzt werden kann. Die Sensoren 18a-b und 20 arbeiten nach einem berührungslos wirkenden Sensorprinzip, vorzugsweise nach einem optischen Sensorprinzip wie bei einem Lichtgitter, einem Laserscanner, einem LIDAR-Sensor, einer Kamera oder einer 3D-Kamera, insbesondere Lichtlaufzeitkamera, aber auch nach nicht-optischen Sensorprinzipien wie bei einem Radar oder Funkortungssystem, insbesondere einem Ultrabreitbandsystem, wie es in der einleitend genannten EP 3 859 382 A1 beschrieben wird. Die Sensoren 18a-b und 20 können beliebig aus den genannten und weiteren berührungslos wirkenden Sensoren ausgewählt werden, wobei manche Sensoren sich nicht für beide Absicherungssysteme 10, 14 gleichermaßen eignen, beispielsweise ein Lichtgitter nur für das stationäre Absicherungssystem 10. Die Erfindung wird im Folgenden beispielhaft mit Laserscannern beschrieben. Die Objekterkennung basiert dabei auf einem Schutzfeldkonzept, auch das ist beispielhaft, da es nur darauf ankommt, auf sichere Weise Objekte im Zugangsbereich 12 beziehungsweise im jeweiligen Fahrweg des Ladefahrzeugs 16 zu erfassen.

In dem stationären Absicherungssystem 10 und dem mobilen Absicherungssystem 14 ist jeweils eine Steuer- und Auswertungseinheit 22, 24 vorgesehen. Die Steuer- und Auswertungsfunktionalität mit dem im Anschluss beschriebenen Verfahren kann praktisch beliebig auf die beiden Steuer- und Auswertungseinheiten 22, 24 und auch mindestens eine externe Steuer- und Auswertungseinheit eines übergeordneten Systems verteilt sein. Vorzugsweise erfolgt jedoch zumindest die jeweilige Objektdetektion beziehungsweise Schutzfeldauswertung nahe bei oder in dem zugehörigen Sensor 18a-b, 20.

Als Hardware der Steuer- und Auswertungseinheiten 22, 24 kommen beliebige Recheneinheiten in Betracht, etwa digitale Rechenbausteine wie ein Mikroprozessor oder eine CPU (Central Processing Unit), ein FPGA (Field Programmable Gate Array), ein DSP (Digital Signal Processor), ein ASIC (Application-Specific Integrated Circuit), ein Kl-Prozessor, eine NPU (Neural Processing Unit), eine GPU (Graphics Processing Unit) oder dergleichen. Eine externe Recheneinheit kann ein Computer beliebiger Bauart einschließlich Notebooks, Smartphones, Tablets, einer (Sicherheits-)steuerung ebenso sein wie ein lokales Netzwerk, ein Edge-Device oder eine Cloud. Sicherheitsrelevante Teile der Steuerung und Auswertung sind vorzugsweise in sicherer Hardware ausgeführt oder erreichen durch sonstige Maßnahmen wie Redundanz oder Tests ein gefordertes Sicherheitsniveau.

Weiterhin ist in dem stationären Absicherungssystem 10 und dem mobilen Absicherungssystem 14 jeweils eine Kommunikationsschnittstelle 26, 28 vorgesehen. Darüber stehen das stationäre Absicherungssystem 10 und das mobile Absicherungssystem 14 vorzugsweise drahtlos miteinander in Verbindung, um Daten, Informationen und Steuersignale auszutauschen. Die Kommunikationsverbindungen können über ein beliebiges Protokoll wie Bluetooth, WLAN, Wi-Fi, 3G/4G/5G und prinzipiell jegliches andere Protokoll realisiert sein.

Das stationäre Absicherungssystem 10 realisiert die Sicherheitsfunktion Zugangsabsicherung. Es wird also erkannt, wenn sich ein Objekt in dem Zugangsbereich 12 aufhält und insbesondere eine Person hindurchzulaufen versucht. Dabei besteht die Möglichkeit, bestimmte Teile des abgesicherten Zugangsbereichs 12 freizuhalten, um so einen Durchfahrtkorridor zu schaffen, in dem die Sicherheitsfunktion überbrückt oder stummgeschaltet ist (Muting). Dies kann auch durch Umschaltung auf ein Schutzfeld mit einem Freibereich umgesetzt werden.

Das mobile Absicherungssystem 14 realisiert die Sicherheitsfunktion Kollisionsvermeidung des Ladefahrzeugs 16. Dadurch werden Sicherheitsabstände eingehalten und kommen Objekte oder Personen nicht in direkten Kontakt mit dem Ladefahrzeug 16, oder höchstens in einen folgenlosen Kontakt bei minimaler, sicherer Geschwindigkeit des Ladefahrzeugs 16.

Wird ein unzulässiges Objekt in dem Zugangsbereich 12 beziehungsweise vor dem Ladefahrzeug 16 erfasst, so löst dies eine Sicherheitsreaktion des Ladefahrzeugs 16 aus, um Gefährdungen für Personen zu vermeiden. Auf ein Objekt vor dem Ladefahrzeug 16 reagiert das mobile Absicherungssystem 14 sicherheitsgerichtet im Rahmen der eigenen Kollisionsvermeidung. Eine sicherheitsrelevante Situation aufgrund eines Objekts in dem Zugangsbereich 12 wird dem mobilen Absicherungssystem 14 über die Kommunikationsschnittstellen 26, 28 von dem stationären Absicherungssystem 10 gemeldet. Als jeweilige Sicherheitsreaktion wird das Ladefahrzeug 16 angehalten, führt eine Ausweichbewegung durch oder reduziert seine Geschwindigkeit derart, dass eine Kollision mit einer Person ausgesprochen unwahrscheinlich wird und jedenfalls deren Gesundheit nicht ernstlich gefährden kann. Die Sicherheitsreaktion kann sich unterscheiden, je nachdem, ob sie von der Kollisionsvermeidung oder der Zugangsabsicherung ausgelöst ist.

Mit dem mobilen Absicherungssystem 14 und/oder weiterer nicht gezeigter Sensorik ist vorzugsweise zudem ein sicheres Lokalisierungssystem des Ladefahrzeugs 16 implementiert. Dazu kann ergänzend eine Karte in der Steuer- und Auswertungseinheit 24 hinterlegt sein. Es ist auch möglich, optische oder physische Marker in der Umgebung der Be-/Entladezone anzubringen. Mit dem Lokalisierungssystem erkennt das Ladefahrzeug 16 insbesondere, dass es sich in einem sicherheitsrelevanten Bereich und nicht mehr beispielsweise in einem abgesperrten, für Personen unzugänglichen Logistikbereich befindet, so dass das mobile Absicherungssystem 14 aktiv zu schalten ist. Außerdem können damit bestimmte relevante, noch zu beschreibende Positionen während des Be-/Entladens erkannt werden. Für die Umsetzung des erfindungsgemäßen Verfahrens genügen einige wenige Positionen, die beispielsweise Sicherheitspunkte gemäß der einleitend genannten DE 10 2019 128 782 A1 sein können.

Figur 1 zeigt ein stationäres Absicherungssystem 10 in einer 1:1-Zuordnung zu einem mobilen Absicherungssystem 14. Das ist eine beispielhafte Vereinfachung. Es können ein oder mehrere stationäre Absicherungssysteme 10 mit einem oder mehreren mobilen Absicherungssystemen 14 zusammenarbeiten beziehungsweise entsprechende Verbindungen je nach Ort und Aufgabe des Ladefahrzeugs 16 hergestellt oder aufgelöst werden.

Figur 2 zeigt eine schematische Draufsicht auf einen Ladebereich beziehungsweise eine Be-/Entladezone. Der Ladebereich umfasst eine Laderampe 30 und einen Laderaum 32, von dem nur der vordere Teil dargestellt ist. Die Laderampe 30 bildet einen sicherheitsrelevanten Bereich ("confined zone"), weil sich hier Personen aufhalten können. Deshalb muss das Ladefahrzeug 16 zur Vermeidung möglicher Gefährdungen der Personen sein mobiles Absicherungssystem 14 aktivieren, das hier vereinfachend und stellvertretend nur mit einem Laserscanner als Sensor 20 dargestellt ist. Figur 2 zeigt einige mögliche Gefährdungen durch eine Person 34a auf der Laderampe, eine Person 34b in dem Laderaum 32 oder eine seitlich befindliche Person 34c-d, der insbesondere ein Arm eingequetscht werden könnte. Das mobile Absicherungssystem 14 ist zwar in der Lage, alle diese Personen 34a-d rechtzeitig zu erkennen und eine entsprechende Sicherheitsreaktion einzuleiten. Das Problem besteht darin, dass vor allem innerhalb des Laderaums 32 wegen der dicht gepackten und unbekannten Ladeobjekte praktisch nicht entschieden werden kann, ob sich dort eine Person 34b befindet. Das Ladefahrzeug 16 muss vorsichthalber seine Sicherheitsreaktion einleiten und ist damit so gut wie nicht verfügbar. Andererseits kann das mobile Absicherungssystem 14 nicht einfach deaktiviert werden, weil dann die Sicherheit in den gezeigten und weiteren Positionen von Personen 34a-d nicht gewährleistet wäre.

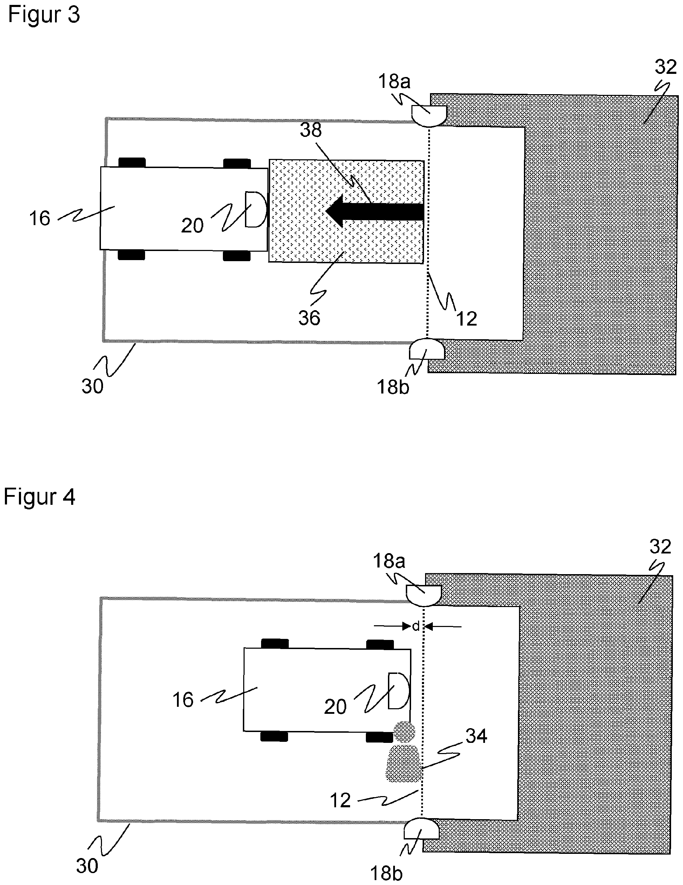

Unter Bezugnahme auf die Figuren 3 bis 9 wird nun das erfindungsgemäße Verfahren zum Be- beziehungsweise Entladen des Laderaums 32 erläutert. Dabei müssen nicht zwangsläufig alle beschriebenen Schritte des besonders bevorzugten Gesamtkonzepts durchgeführt werden. Beispielhaft handelt es sich bei dem Laderaum 32 um den Auflieger eines Lastkraftwagens. Die Erfindung ist jedoch auch für einen anderen Laderaum 32 mit einem andere Vorbereich als der Laderampe 30 einsetzbar.

Figur 3 zeigt eine schematische Draufsicht auf den Ladebereich mit Laderampe 30 und Laderaum 32 bei Annäherung eines einfahrenden Ladefahrzeugs 16. Der Laderaum 32 ist zu allen Seiten mit Ausnahme des Zugangsbereichs 12 geschlossen, über den der Laderaum 32 von der Laderampe 30 aus befahren werden kann. Das stationäre Absicherungssystem 10 überwacht den Zugangsbereich 12, so dass kein Objekt und keine Person unbemerkt in den Laderaum 32 gelangt. Von dem stationären Absicherungssystem 10 werden hier vereinfachend und stellvertretend nur zwei gegenüber angeordnete Laserscanner als Sensoren 18a-b dargestellt, das mobile Absicherungssystem 14 des Ladefahrzeugs 16 wird weiterhin von dem Sensor 20 repräsentiert, der ein Schutzfeld 36 in Fahrrichtung überwacht.

Zu Beginn eines Be-/Entladevorgangs wird der Auflieger mit dem Laderaum 32 an der Laderampe angedockt, und der Fahrer des Lastkraftwagens oder ein Logistikmitarbeiter öffnet den Auflieger und macht damit den Laderaum 32 über den Zugangsbereich 12 zugänglich. Es folgt eine manuelle Kontrolle, dass sich keine Person in dem Laderaum 32 befindet, durch Nachsehen oder Rufen und dergleichen. Dann wird das stationäre Absicherungssystem 10 beispielsweise über einen Taster aktiv geschaltet. Ein derartiger händischer Freigabe- oder (Wieder-)anlaufvorgang für die Inbetriebnahme ist für sicherheitstechnische Anwendungen üblich. Nach der Aktivierung gewährleistet das stationäre Absicherungssystem, dass kein Zugang erfolgt und der Laderaum 32 frei von Personen bleibt.

Wenn sich das Ladefahrzeug 16 der Laderampe 30 nähert, so erkennt es vorzugsweise mittels seines sicheren Lokalisierungssystems, dass es sich nun in einem sicherheitsrelevanten Bereich befindet, und es aktiviert daraufhin sein mobiles Absicherungssystem 14 beziehungsweise das Schutzfeld 36. Alternativ kann das Schutzfeld 36 stets während der Fahrt des Ladefahrzeugs 16 aktiv sein, mit Ausnahme der noch erläuterten Bewegungen im Laderaum 32. Das Ladefahrzeug 16 beziehungsweise dessen mobiles Absicherungssystem 14 baut eine Kommunikationsverbindung zu dem stationären Absicherungssystem 10 auf. Es fragt an, ob die Zugangsabsicherung betriebsbereit ist, d.h. bisher kein Zugang erfolgt ist und sich demnach keine Person im Laderaum 32 befinden kann. Während der Annährung des Ladefahrzeugs 16 an den abgesicherten Zugangsbereich 12 kann das Schutzfeld 36, wie durch den Pfeil 38 angedeutet, sukzessive verkürzt werden. Eine Überwachung in den Laderaum 32 hinein ist nicht erforderlich, da das stationäre Absicherungssystem 10 den Zugang verhindert, so dass ein in den Laderaum 32 hineinragendes Schutzfeld 36 ohnehin keine Person erfassen kann, sehr wohl aber eine Fehlauslösung der Sicherheitsreaktion durch ein Objekt im Laderaum 32 möglich ist.

Figur 4 zeigt eine schematische Draufsicht auf den Ladebereich, in der das einfahrende Ladefahrzeug 16 eine erste Position dicht an dem abgesicherten Zugangsbereich 12 erreicht hat. In der ersten Position genügt der Abstand d zwischen Ladefahrzeug 16 und abgesichertem Zugangsbereich 12 nicht mehr, dass eine schattiert angedeutete Person 34 noch dazwischen passen würde. Beispielsweise beträgt der Abstand d 20 cm oder noch weniger, aber auch mit einem etwas größeren Abstand d wie 30 cm, 50 cm oder 70 cm wird es einer Person nicht gelingen, sich zwischen Ladefahrzeug 16 und abgesicherten Zugangsbereich 12 zu schieben, ohne von dem stationären Absicherungssystem 10 bemerkt zu werden. Das Ladefahrzeug 16 erkennt das Erreichen der ersten Position insbesondere mit seinem sicheren Lokalisierungssystem.

In der ersten Position fordert das mobile Absicherungssystem 14 bei dem stationären Absicherungssystem die Freigabe eines Durchfahrtkorridors an. Ein entsprechender Abschnitt des abgesicherten Zugangsbereichs 12 soll also stummgeschaltet werden (Muting) oder auf eine Schutzfeldkonfiguration umgeschaltet werden, die den Durchfahrtkorridor freilässt. Sofern erforderlich, weil der Durchfahrtkorridor nicht schnell genug eingerichtet werden kann, hält das Ladefahrzeug 16 vorübergehend an. Das mobile Absicherungssystem 14 wird ab nun vorzugsweise inaktiv geschaltet, da sich vor dem Ladefahrzeug 16 und damit im Laderaum 32 hinter dem abgesicherten Zugangsbereich 12 ohnehin keine Person befinden kann.

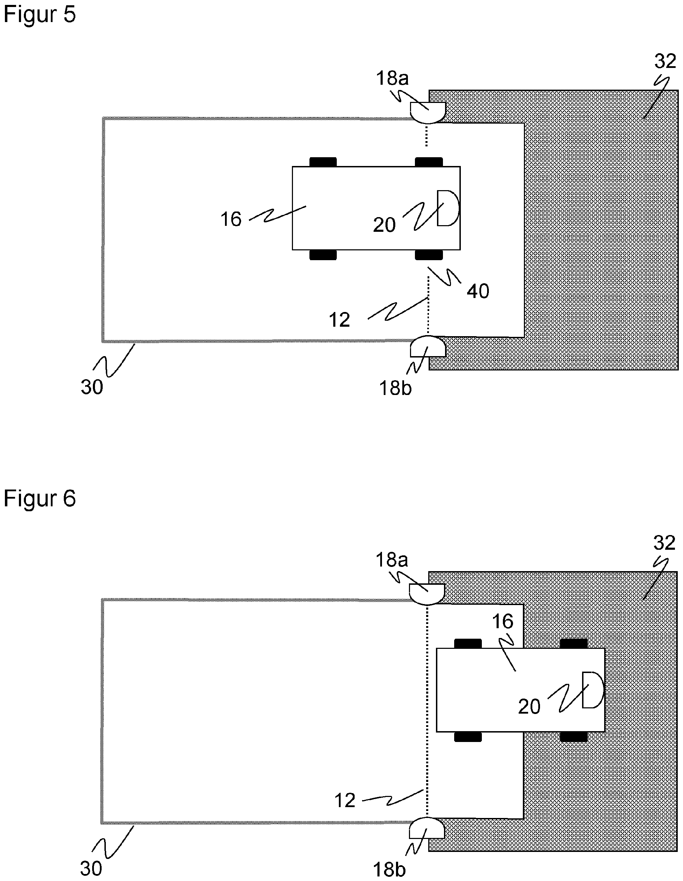

Figur 5 zeigt eine schematische Draufsicht auf den Ladebereich, in der sich das einfahrende Ladefahrzeug 16 in dem freigegebenen oder stummgeschalteten Durchfahrtkorridor 40 des abgesicherten Zugangsbereichs 12 befindet. Lateral, d.h. in einer Dimension quer zur Fahrtrichtung, wird die Lage des Durchfahrtkorridors 40 entweder dynamisch an die laterale Position des Ladefahrzeugs 16 angepasst, oder das Ladefahrzeug 16 wird in eine erste Position mit einer festen lateralen Position gefahren, so dass die laterale Position eines festgelegten Durchfahrtkorridors 40 zu der lateralen Position des Ladefahrzeugs 16 passt. In den Figuren ist die Fahrtrichtung beispielhaft bei der Einfahrt von links nach rechts, demnach entspricht die laterale Position in der Darstellung der vertikalen Lage. Während der Durchfahrt findet vorzugsweise ein Signalaustausch zwischen dem mobilen Absicherungssystem 14 und dem stationären Absicherungssystem 10 statt, um den Durchfahrtkorridor 40 offenzuhalten.

Figur 6 zeigt eine schematische Draufsicht auf den Ladebereich, nachdem das einfahrende Ladefahrzeug 16 in eine zweite Position dicht hinter dem abgesicherten Zugangsbereich 12 eingefahren ist. In der zweiten Position ist analog zu der ersten Position zwischen dem Ladefahrzeug 16, nun dessen hinterem Ende, und dem abgesicherten Zugangsbereich 12 zu wenig Platz, als dass eine Person 34 hineinpassen würde. Der Durchfahrtkorridor 40 wird nun wieder geschlossen, nachdem das mobile Absicherungssystem 14 die Ankunft in der zweiten Position festgestellt hat und dem stationären Absicherungssystem 10 gemeldet hat, dass das Stummschalten nicht länger benötigt wird. Der abgesicherte Zugangsbereich 12 ist damit nicht mehr durchlässig. Das Ladefahrzeug 16 kann sich nun bei weiter inaktivem mobilen Absicherungssystem 14 frei im Laderaum 32 bewegen und dort Ladungsobjekte bewegen, insbesondere dort seine mitgebrachte Ladung absetzen beziehungsweise eine neue Ladung aufnehmen.

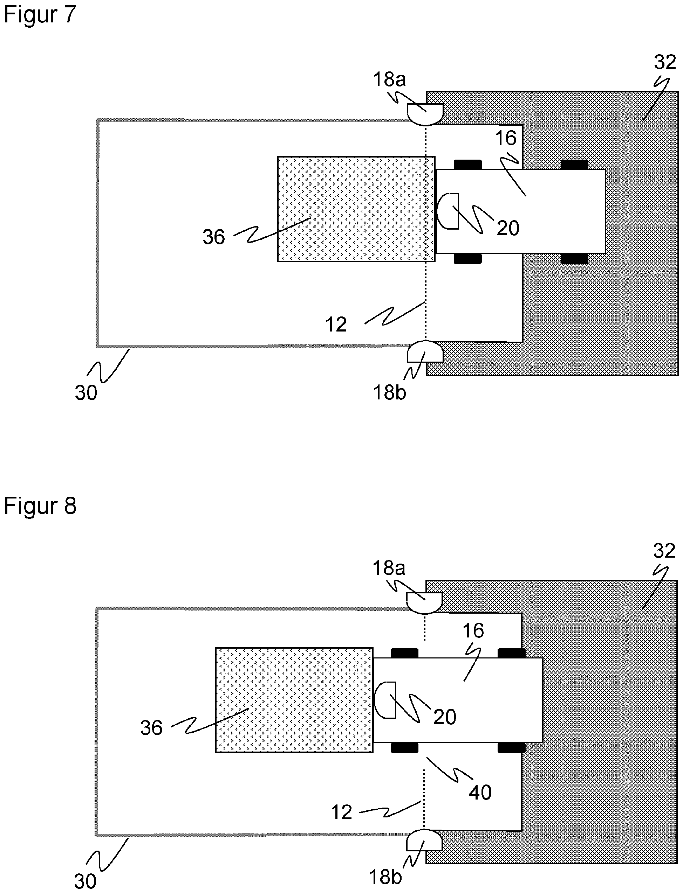

Figur 7 zeigt eine schematische Draufsicht auf den Ladebereich, in der das Ladefahrzeug 16 nach getaner Arbeit den Laderaum 32 wieder verlassen möchte und bei der Ausfahrt aus dem Laderaum 32 erneut die zweite Position dicht an dem abgesicherten Zugangsbereich 12 erreicht hat. Da es sich um die Rückfahrt handelt, ist hier wieder das vordere Ende des Ladefahrzeugs 16 maßgeblich. Übrigens kann das Ladefahrzeug 16 statt in dem Laderaum 32 zu wenden auch rückwärts fahren, dann ist doch weiterhin das hintere Ende des Ladefahrzeugs 16 maßgeblich, und das mobile Absicherungssystem 14 muss die Rückwärtsfahrt absichern, was hier nicht weiter unterschieden wird.

Analog zu der Einfahrt an der ersten Position fordert das mobile Absicherungssystem 14 bei der Ausfahrt an der zweiten Position von dem stationären Absicherungssystem 10 die Freigabe des Durchfahrtkorridors 40 an, und das Ladefahrzeug 16 wird erforderlichenfalls angehalten, bis eine Rückbestätigung über die Einrichtung des Durchfahrtkorridors 40 erfolgt ist. Das mobile Absicherungssystem 14 schaltet spätestens jetzt seinen Kollisionsschutz beziehungsweise das Schutzfeld 36 wieder aktiv, da sich vor dem abgesicherten Zugangsbereich 12 eine Person 34 aufhalten kann. Die Aktivierung kann auch schon etwas früher erfolgen, je nachdem, mit welcher Geschwindigkeit sich das Ladefahrzeug 16 bewegt. Wenn es beispielsweise ohnehin planmäßig in der zweiten Position erst einmal zur Einrichtung des Durchfahrtkorridors 40 anhält, ist eine frühere Aktivierung unnötig.

Figur 8 zeigt eine schematische Draufsicht auf den Ladebereich, in der sich das ausfahrende Ladefahrzeug 16 in dem Durchfahrtkorridor 40 durch den abgesicherten Zugangsbereich 12 befindet. Wiederum findet während der Durchfahrt vorzugsweise ein Signalaustausch zwischen mobilem Absicherungssystem 14 und stationärem Absicherungssystem 10 statt, um den Durchfahrtkorridor 40 während der Durchfahrt offenzuhalten.

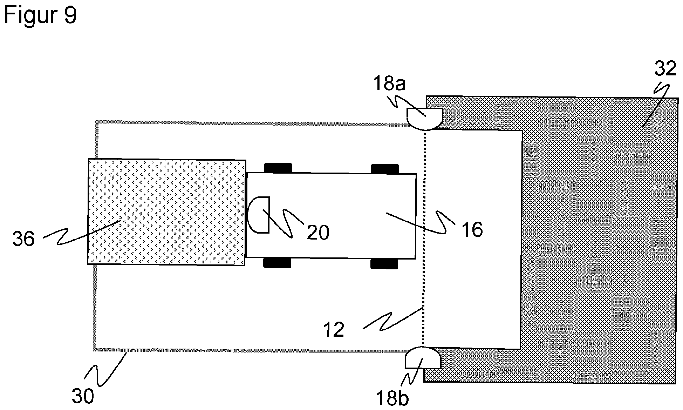

Figur 9 zeigt eine schematische Draufsicht auf den Ladebereich, in der das ausfahrende Ladefahrzeug 16 nach der Durchfahrt die erste Position außerhalb des Laderaums 32 und dicht an dem abgesicherten Zugangsbereich 12 erreicht hat. Das mobile Absicherungssystem 14 signalisiert dem stationären Absicherungssystem 10, dass der Zugangsbereich 12 wieder geschlossen werden kann. Sobald das geschehen ist, sichert das stationäre Absicherungssystem 10 wieder allein, dass keine Personen unbemerkt in den Laderaum 32 gelangen. Das Ladefahrzeug 16 kann sich auf der Laderampe 30 in der alleinigen Verantwortung seines mobilen Absicherungssystems 14 weiterbewegen und beispielsweise das nächste Ladeobjekt holen oder ein aus dem Laderaum 32 mitgebrachtes Ladeobjekt an einem dafür vorgesehenen Ort beispielsweise am Rand der Laderampe 30 oder in einer Logistikhalle absetzen.

Solange der Durchfahrtkorridor 40 offen ist, und dies gilt bei der Ausfahrt wie schon zuvor bei der Einfahrt, verhindert das Ladefahrzeug 16 physisch aufgrund der an das Ladefahrzeug 16 angepassten Abmessungen des Durchfahrtkorridors 40 sowie der dicht an dem abgesicherten Zugangsbereich 12 liegenden ersten Position und zweiten Position ein unbemerktes Eindringen einer Person, die unweigerlich von dem nicht stummgeschalteten Anteil des abgesicherten Zugangsbereichs 12 bemerkt würde.

Sofern zu irgendeinem Zeitpunkt das stationäre Absicherungssystem 10 ein Objekt in dem abgesicherten Zugangsbereich 12 erkennt, darf das Ladefahrzeug 16 nicht mehr in den Laderaum 32 einfahren, bis das stationäre Absicherungssystem 10 wieder freigegeben ist, was in aller Regel eine manuelle Überprüfung des Laderaums 32 erfordert. Unter Umständen kann das stationäre Absicherungssystem 10 noch eine Bewegungsrichtung differenzieren und ein sich partiell hinein-, dann aber wieder hinausbewegendes Objekt doch noch tolerieren. Ein sich nur hinausbewegendes Objekt deutet darauf hin, dass die anfängliche Freigabe fehlerhaft war, das darf also nicht vorkommen, und hier sollte gegebenenfalls eine grundsätzliche Bestandsaufnahme erfolgen. Sofern sich das Ladefahrzeug 16 schon in dem Laderaum 32 befindet, wenn der abgesicherte Zugangsbereich verletzt wird, muss das Ladefahrzeug 16 anhalten oder mit einer sehr langsamen sicheren Geschwindigkeit beziehungsweise mit aktiver Kollisionsvermeidungsfunktion den Laderaum 32 verlassen.

## Patentansprüche

1. Verfahren zum Beladen und/oder Entladen eines Laderaums (32), insbesondere des Laderaums (32) eines Transportfahrzeugs, mit einem Ladefahrzeug (16), das mindestens einmal in den Laderaum (32) fährt, um mindestens ein Ladeobjekt abzulegen und/oder abzuholen, wobei ein Zugangsbereich (12) des Laderaums (32) in einer stationären Absicherung von mindestens einem ersten Sensor (18a-b), der die Anwesenheit eines Objekts in dem Zugangsbereich (12) erkennt, und das Ladefahrzeug (16) in einer mobilen Absicherung von mindestens einem zweiten Sensor (20) abgesichert wird, der die Anwesenheit eines Objekts vor dem Ladefahrzeug (16) erkennt und somit stationäre und mobile Absicherung gemeinsam dafür sorgen, dass das Ladefahrzeug (16) während des Beladens und/oder Entladens nicht mit unerwarteten Objekten kollidiert, **dadurch gekennzeichnet,**
**dass** das Ladefahrzeug (16) bei der Einfahrt in den Laderaum (32) zunächst in eine erste Position fährt, die sich so nahe an dem abgesicherten Zugangsbereich (12) befindet, dass keine Person (34) zwischen das Ladefahrzeug (16) und den abgesicherten Zugangsbereich (12) passt, und dann die Absicherung des Zugangsbereichs (12) durch den ersten Sensor (18a-b) derart angepasst wird, dass ein Durchfahrtkorridor (40) für das Ladefahrzeug (16) geschaffen ist, somit in der stationären Absicherung ein partielles Stummschalten erfolgt, das es dem Ladefahrzeug (16) ermöglicht, durch den abgesicherten Zugangsbereich (12) in den Laderaum (32) zu fahren.

2. Verfahren nach Anspruch 1,
wobei bei Erkennung der Anwesenheit eines Objekts eine Sicherheitsreaktion des Ladefahrzeugs (16) eingeleitet wird.

3. Verfahren nach Anspruch 1 oder 2,
wobei der Laderaum (32) ein Anhänger oder Auflieger eines Nutzfahrzeugs oder Lastkraftwagens und/oder der Zugangsbereich (12) an einer Laderampe (30) angeordnet ist.

4. Verfahren nach einem der vorhergehenden Ansprüche,
wobei das Ladefahrzeug (16) durch den Durchfahrtkorridor (40) in eine zweite Position fährt, die sich so nahe an dem abgesicherten Zugangsbereich (12) befindet, dass keine Person (34) zwischen das Ladefahrzeug (16) und den abgesicherten Zugangsbereich (12) passt, und dann der Durchfahrtkorridor (40) geschlossen und damit die Absicherung des Zugangsbereichs (12) durch den ersten Sensor (18a-b) wieder vollständig aktiviert wird.

5. Verfahren nach einem der vorhergehenden Ansprüche,
wobei das Ladefahrzeug (16) bei der Ausfahrt aus dem Laderaum (32) zunächst in die zweite Position fährt und dann die Absicherung des Zugangsbereichs (12) durch den ersten Sensor (18a-b) derart angepasst wird, dass ein Durchfahrtkorridor (40) für das Ladefahrzeug (32) geschaffen ist und wobei insbesondere das Ladefahrzeug (16) durch den Durchfahrtkorridor (40) in die erste Position fährt und dann der Durchfahrtkorridor (40) geschlossen und damit die Absicherung des Zugangsbereichs (12) durch den ersten Sensor (18a-b) wieder vollständig aktiviert wird.

6. Verfahren nach einem der vorhergehenden Ansprüche,
wobei eine laterale Position des Durchfahrtkorridors (40) an eine laterale Position des Ladefahrzeugs (16) angepasst wird.

7. Verfahren nach einem der vorhergehenden Ansprüche,
wobei die Absicherung des Ladefahrzeugs (16) mit dem zweiten Sensor (20) während der Bewegung in dem Laderaum (32) inaktiv ist, wobei insbesondere die Absicherung des Ladefahrzeugs (16) mit dem zweiten Sensor (20) bei der Einfahrt in den Laderaum (32) frühestens ab der ersten Position inaktiv und bei der Ausfahrt aus dem Laderaum (32) bis spätestens zu der zweiten Position wieder aktiv geschaltet wird.

8. Verfahren nach einem der vorhergehenden Ansprüche,
wobei das Ladefahrzeug (16) erkennt, wenn es sich in einen sicherheitsrelevanten Bereich (30) vor dem Zugangsbereich (12) bewegt, und spätestens dann die Absicherung mit dem zweiten Sensor (20) aktiv schaltet.

9. Verfahren nach einem der vorhergehenden Ansprüche,
wobei der Querschnitt des Durchfahrtkorridors (40) dem Querschnitt des Ladefahrzeugs (16) zumindest bis auf einen Pufferbereich kleiner als eine Person (34) entspricht.

10. Verfahren nach einem der vorhergehenden Ansprüche,
wobei ein stationäres Absicherungssystem (10) des Zugangsbereichs (12) mit dem ersten Sensor (18a-b) und ein mobiles Absicherungssystem (14) des Ladefahrzeugs (16) mit dem zweiten Sensor (20) miteinander in Kommunikationsverbindung (26, 28) stehen, insbesondere damit das Ladefahrzeug (16) ein Öffnen und Schließen des Durchfahrtkorridors (40) anfordert und/oder um dem Ladefahrzeug (16) die Anwesenheit eines Objekts in dem Zugangsbereich (12) mitzuteilen.

11. Verfahren nach einem der vorhergehenden Ansprüche,
wobei der erste Sensor (18a-b) zur Absicherung des Zugangsbereichs (12) ein aufrechtes, insbesondere vertikales Schutzfeld überwacht und/oder der zweite Sensor (20) zur Absicherung des Ladefahrzeugs (16) ein insbesondere horizontales Schutzfeld (36) in Fahrtrichtung überwacht.

12. Verfahren nach Anspruch 11,
wobei das Schutzfeld (36) des zweiten Sensors mit Annäherung an den Zugangsbereich (12) sukzessive verkürzt wird.

13. Verfahren nach einem der vorhergehenden Ansprüche,
wobei der erste Sensor (18a-b) und/oder der zweite Sensor (20) einer der folgenden ist: ein einlagiger oder mehrlagiger Laserscanner, ein LIDAR-Sensor, eine 3D-Kamera, insbesondere eine Lichtlaufzeitkamera, ein Radar oder ein Funkortungssystem.

14. Verfahren nach einem der vorhergehenden Ansprüche,
wobei das Ladefahrzeug (16) sicher lokalisiert wird, zumindest in der ersten Position und/oder der zweiten Position.

15. Absicherungssystem (10, 14) für das Beladen und/oder Entladen eines Laderaums (32) mit einem Ladefahrzeug (16), wobei das Absicherungssystem (10, 14) ein stationäres Sensorsystem (10) zum Absichern eines Zugangsbereichs (12) des Laderaums (32) mit einem ersten Sensor (18a-b) zur Erkennung der Anwesenheit eines Objekts in dem Zugangsbereich (12) und ein mobiles Sensorsystem (14) zum Absichern des Ladefahrzeugs (16) mit einem zweiten Sensor (20) zu Erkennung der Anwesenheit eines Objekts vor dem Ladefahrzeug (16) aufweist und somit das stationäre Sensorsystem (10) und das mobile Sensorsystem (14) gemeinsam dafür sorgen, dass das Ladefahrzeug (16) während des Beladens und/oder Entladens nicht mit unerwarteten Objekten kollidiert, **dadurch gekennzeichnet,**
**dass** das Absicherungssystem (10, 14) dafür ausgebildet ist, in dem stationären Sensorsystem (10) einen Durchfahrtkorridor (40) für das Ladefahrzeug (16) zu schaffen, wenn das Ladefahrzeug (16) bei der Einfahrt in den Laderaum (32) in eine erste Position gefahren ist, somit in dem stationären Sensorsystem (10) ein partielles Stummschalten erfolgt, das es dem Ladefahrzeug (16) ermöglicht, durch den abgesicherten Zugangsbereich (12) in den Laderaum (32) zu fahren, wobei die erste Position sich so nahe an dem abgesicherten Zugangsbereich (12) befindet, dass keine Person (34) zwischen das Ladefahrzeug (16) und den abgesicherten Zugangsbereich (12) passt.

## Claims

1. A method for loading and/or unloading a loading space (32), in particular the loading space (32) of a transport vehicle, using a loading vehicle (16) which drives at least once into the loading space (32) in order to deposit and/or pick up at least one load object, an access area (12) of the loading space (32) being protected in a stationary protection by at least one first sensor (18a-b) that detects the presence of an object in the access area (12), and the loading vehicle (16) being protected in a mobile protection by at least one second sensor (20) that detects the presence of an object in front of the loading vehicle (16) and thus stationary and mobile protection jointly ensure that the loading vehicle (16) does not collide with unexpected objects during loading and/or unloading,
**characterized in that**, when entering the loading space (32), the loading vehicle (16) first moves into a first position which is so close to the protected access area (12) that no person (34) can fit between the loading vehicle (16) and the protected access area (12), and then the protection of the access area (12) by the first sensor (18a-b) is adapted in such a way that a passage corridor (40) is created for the loading vehicle (16), thus partial muting takes place in the stationary protection, which enables the loading vehicle (16) to drive through the protected access area (12) into the loading space (32).

2. The method according to claim 1,
wherein a safety reaction of the loading vehicle (16) is initiated when the presence of an object is detected.

3. The method according to claim 1 or 2,
wherein the loading space (32) is a trailer or semitrailer of a commercial vehicle or truck and/or the access area (12) is arranged at a loading ramp (30).

4. The method according to any of the preceding claims,
wherein the loading vehicle (16) drives through the passage corridor (40) to a second position which is so close to the protected access area (12) that no person (34) fits between the loading vehicle (16) and the protected access area (12), and then the passage corridor (40) is closed and thus the protection of the access area (12) by the first sensor (18a-b) is fully reactivated.

5. The method according to any of the preceding claims,
wherein the loading vehicle (16) initially moves into the second position when leaving the loading space (32) and then the protection of the access area (12) by the first sensor (18a-b) is adapted such that a passage corridor (40) is created for the loading vehicle (32) and wherein in particular the loading vehicle (16) moves through the passage corridor (40) into the first position and then the passage corridor (40) is closed and thus the protection of the access area (12) by the first sensor (18a-b) is fully activated again.

6. The method according to any of the preceding claims,
wherein a lateral position of the passage corridor (40) is adapted to a lateral position of the loading vehicle (16).

7. The method according to any of the preceding claims,
wherein the protection of the loading vehicle (16) with the second sensor (20) is inactive during the movement in the loading space (32), wherein in particular the protection of the loading vehicle (16) with the second sensor (20) is switched to inactive at the earliest from the first position when entering the loading space (32) and is switched to active again at the latest up to the second position when leaving the loading space (32).

8. The method according to any of the preceding claims,
wherein the loading vehicle (16) recognizes when it moves into a safety-relevant area (30) in front of the access area (12) and at the latest then switches the protection with the second sensor (20) to active.

9. The method according to any of the preceding claims,
wherein the cross-section of the passage corridor (40) corresponds to the cross-section of the loading vehicle (16) at least except for a buffer area smaller than a person (34).

10. The method according to any of the preceding claims,
wherein a stationary safeguarding system (10) of the access area (12) including the first sensor (18a-b) and a mobile safeguarding system (14) of the loading vehicle (16) including the second sensor (20) are in communication connection (26, 28) with each other, in particular so that the loading vehicle (16) requests an opening and closing of the passage corridor (40) and/or in order to inform the loading vehicle (16) of the presence of an object in the access area (12).

11. The method according to any of the preceding claims,
wherein the first sensor (18a-b) monitors an upright, in particular vertical, protective field to protect the access area (12) and/or the second sensor (20) monitors an in particular horizontal protective field (36) in the direction of travel to protect the loading vehicle (16).

12. The method according to claim 11,
wherein the protective field (36) of the second sensor is successively shortened as the access area (12) is approached.

13. The method according to any of the preceding claims,
wherein the first sensor (18a-b) and/or the second sensor (20) is one of the following: a single-layer or multi-layer laser scanner, a LIDAR sensor, a 3D camera, in particular a time-of-flight camera, a radar or a radiolocation system.

14. The method according to any of the preceding claims,
wherein the loading vehicle (16) is reliably localized, at least in the first position and/or the second position.

15. A safety system (10, 14) for loading and/or unloading a loading space (32) with a loading vehicle (16), wherein the safety system (10, 14) comprises a stationary sensor system (10) for protecting an access area (12) of the loading space (32) using a first sensor (18a-b) for detecting the presence of an object in the access area (12) and a mobile sensor system (14) for protecting the loading vehicle (16) with a second sensor (20) for detecting the presence of an object in front of the loading vehicle (16), and thus the stationary sensor system (10) and the mobile sensor system (14) jointly ensure that the loading vehicle (16) does not collide with unexpected objects during loading and/or unloading,
**characterized in that** the safety system (10, 14) is configured to create a passage corridor (40) for the loading vehicle (16) in the stationary sensor system (10) when the loading vehicle (16) has moved into a first position when entering the loading space (32), so that partial muting takes place in the stationary sensor system (10), which enables the loading vehicle (16) to drive through the protected access area (12) into the loading space (32), the first position being so close to the protected access area (12) that no person (34) can fit between the loading vehicle (16) and the protected access area (12).

## Revendications

1. Procédé de chargement et/ou de déchargement d'un espace de chargement (32), en particulier de l'espace de chargement (32) d'un véhicule de transport, au moyen d'un véhicule de chargement (16) qui entre au moins une fois dans l'espace de chargement (32) pour déposer et/ou récupérer au moins un objet de chargement,
dans lequel, au sein d'une sécurisation stationnaire, une zone d'accès (12) de l'espace de chargement (32) est sécurisée par au moins un premier capteur (18a-b) qui détecte la présence d'un objet dans la zone d'accès (12), et au sein d'une sécurisation mobile, le véhicule de chargement (16) est sécurisé par au moins un deuxième capteur (20) qui détecte la présence d'un objet devant le véhicule de chargement (16), moyennant quoi les sécurisations stationnaire et mobile assurent conjointement que le véhicule de chargement (16) n'entre pas en collision avec des objets inattendus pendant le chargement et/ou le déchargement,
**caractérisé en ce que**
lors de l'entrée dans l'espace de chargement (32), le véhicule de chargement (16) se déplace d'abord vers une première position qui est suffisamment proche de la zone d'accès sécurisée (12) pour qu'aucune personne (34) ne puisse passer entre le véhicule de chargement (16) et la zone d'accès sécurisée (12), puis la sécurisation de la zone d'accès (12) par le premier capteur (18a-b) est adaptée de telle sorte qu'un couloir de passage (40) soit créé pour le véhicule de chargement (16), de sorte qu'une mise en sommeil partielle se produit au sein de la sécurisation stationnaire, ce qui permet au véhicule de chargement (16) d'entrer dans l'espace de chargement (32) à travers la zone d'accès sécurisée (12).

2. Procédé selon la revendication 1,
cans lequel, en cas de détection de la présence d'un objet, une réaction de sécurité du véhicule de chargement (16) est initiée.

3. Procédé selon la revendication 1 ou 2,
dans lequel l'espace de chargement (32) est une remorque ou une semi-remorque d'un véhicule utilitaire ou d'un camion, et/ou la zone d'accès (12) est disposée sur une rampe de chargement (30).

4. Procédé selon l'une des revendications précédentes,
dans lequel le véhicule de chargement (16) se déplace à travers le couloir de passage (40) vers une deuxième position qui est suffisamment proche de la zone d'accès sécurisée (12) pour qu'aucune personne (34) ne puisse passer entre le véhicule de chargement (16) et la zone d'accès sécurisée (12), puis le couloir de passage (40) est fermé, moyennant quoi la sécurisation de la zone d'accès (12) par le premier capteur (18a-b) est réactivée entièrement.

5. Procédé selon l'une des revendications précédentes,
dans lequel, lors de la sortie de l'espace de chargement (32), le véhicule de chargement (16) se déplace d'abord vers la deuxième position, puis la sécurisation de la zone d'accès (12) par le premier capteur (18a-b) est adaptée de telle sorte qu'un couloir de passage (40) soit créé pour le véhicule de chargement (32), et, en particulier, le véhicule de chargement (16) se déplace à travers le couloir de passage (40) vers la première position, puis le couloir de passage (40) est fermé, moyennant quoi la sécurisation de la zone d'accès (12) par le premier capteur (18a-b) est réactivée entièrement.

6. Procédé selon l'une des revendications précédentes,
dans lequel une position latérale du couloir de passage (40) est adaptée à une position latérale du véhicule de chargement (16).

7. Procédé selon l'une des revendications précédentes,
dans lequel la sécurisation du véhicule de chargement (16) par le deuxième capteur (20) est inactive pendant le déplacement à l'intérieur de l'espace de chargement (32), et, en particulier, la sécurisation du véhicule de chargement (16) par le deuxième capteur (20) est rendue inactive au plus tôt à partir de la première position lors de l'entrée dans l'espace de chargement (32) et est à nouveau rendue active au plus tard jusqu'à la deuxième position lors de la sortie de l'espace de chargement (32).

8. Procédé selon l'une des revendications précédentes,
dans lequel le véhicule de chargement (16) détecte l'état où il se déplace vers une zone (30), pertinente pour la sécurité, située devant la zone d'accès (12), et rend active la sécurisation par le deuxième capteur (20) au plus tard à ce moment-là.

9. Procédé selon l'une des revendications précédentes,
dans lequel la section transversale du couloir de passage (40) correspond à la section transversale du véhicule de chargement (16) au moins à une zone tampon près qui est plus petite qu'une personne (34).

10. Procédé selon l'une des revendications précédentes,
dans lequel un système de sécurisation stationnaire (10) de la zone d'accès (12) avec le premier capteur (18a-b) et un système de sécurisation mobile (14) du véhicule de chargement (16) avec le deuxième capteur (20) sont en liaison de communication (26, 28) entre eux, en particulier pour que le véhicule de chargement (16) demande une ouverture et une fermeture du couloir de passage (40) et/ou pour informer le véhicule de chargement (16) de la présence d'un objet dans la zone d'accès (12).

11. Procédé selon l'une des revendications précédentes,
dans lequel le premier capteur (18a-b) de sécurisation de la zone d'accès (12) surveille un champ de protection redressé, en particulier vertical, et/ou le deuxième capteur (20) de sécurisation du véhicule de chargement (16) surveille un champ de protection (36), en particulier horizontal, dans la direction de déplacement.

12. Procédé selon la revendication 11,
dans lequel le champ de protection (36) du deuxième capteur est successivement raccourci à l'approche de la zone d'accès (12).

13. Procédé selon l'une des revendications précédentes,
dans lequel le premier capteur (18a-b) et/ou le deuxième capteur (20) est l'un des suivants : un scanner laser monocouche ou multicouche, un capteur LIDAR, une caméra 3D, en particulier une caméra à temps de vol, un radar ou un système de radiolocalisation.

14. Procédé selon l'une des revendications précédentes,
dans lequel le véhicule de chargement (16) est localisé de manière sûre, au moins dans la première position et/ou dans la deuxième position.

15. Système de sécurisation (10, 14) pour le chargement et/ou le déchargement d'un espace de chargement (32) au moyen d'un véhicule de chargement (16), le système de sécurisation (10, 14) comprenant un système capteur stationnaire (10) pour sécuriser une zone d'accès (12) de l'espace de chargement (32) au moyen d'un premier capteur (18a-b) destiné à détecter la présence d'un objet dans la zone d'accès (12), et un système capteur mobile (14) pour sécuriser le véhicule de chargement (16) par un deuxième capteur (20) destiné à détecter la présence d'un objet devant le véhicule de chargement (16), moyennant quoi le premier système capteur stationnaire (10) et le système capteur mobile (14) assurent conjointement que le véhicule de chargement (16) n'entre pas en collision avec des objets inattendus pendant le chargement et/ou le déchargement,
**caractérisé en ce que**
le système de sécurisation (10, 14) est conçu pour créer dans le système capteur stationnaire (10) un couloir de passage (40) pour le véhicule de chargement (16) lorsque le véhicule de chargement (16) s'est déplacé vers une première position lors de l'entrée dans l'espace de chargement (32), de sorte qu'une mise en sommeil partielle se produit dans le système capteur stationnaire (10), ce qui permet au véhicule de chargement (16) d'entrer dans l'espace de chargement (32) à travers la zone d'accès sécurisée (12), sachant que la première position est suffisamment proche de la zone d'accès sécurisée (12) pour qu'aucune personne (34) ne puisse passer entre le véhicule de chargement (16) et la zone d'accès sécurisée (12).
